# EUROPEAN PATENT SPECIFICATION

(11) **EP 2 005 916 B1**
(45) Date of publication and mention of the grant of the patent: **13.09.2017**
(21) Application number: 08158648.9
(22) Date of filing: 20.06.2008
(51) Int. Cl.: A61C 8/00

(54) **Support device for one or more elements of a dental prosthesis**
Stützvorrichtung für eines oder mehrere Elemente einer Zahnprothese
Dispositif de support pour un ou plusieurs éléments d'une prothèse dentaire

(30) Priority: 21.06.2007 IT UD20070114
(43) Date of publication of application: 24.12.2008
(73) Proprietor: Oralplant Srl, 33084 Cordenons (PN) (IT)
(72) Inventor: Moro, Sergio, 6877 Coldrerio (CH)
(74) Representative: Petraz, Gilberto Luigi

(56) References cited:
- EP-B- 0 625 031
- US-A- 5 238 405
- US-A1- 2005 053 897
- US-B1- 6 375 465

## Description

### FIELD OF THE INVENTION

The present invention concerns a support device for one or more elements of a dental prosthesis able to be screwed to the bone part of the dental arch of a patient.

### BACKGROUND OF THE INVENTION

Support devices are known, to support and anchor one or more elements of a dental prosthesis, made either of resin or of metal, to the bone part of the dental arch of a patient.

Known support devices, such that disclosed in EP 625.031, in the name of the Applicant, and upon which the two-part form of claim 1 is based, substantially comprise a screw element, known in medical terminology as "osteo-integratable implant" or more simply implant, which can be inserted by screwing into the bone part, and a supporting body, called in medical terminology "dental stump", having a conical axial cavity, coaxially positionable on the implant outside the bone part, and on which the dental prosthesis is able to be mounted.

The reciprocal coupling of the stump and the implant is made, in the state of the art, by means of a bushing, which can be inserted into the implant by means of a polygonal coupling and into the conical cavity of the stump by means of a conical end portion.

Both the conical cavity of the stump, and the conical end portion of the bushing have a relatively low level of taper, that is, less than about 10°, in order to guarantee the reciprocal clamping, both axial and angular, of the stump and the bushing.

The known device also comprises an attachment screw able to be inserted through through the bushing and the stump, in order to screw into the implant and clamp the three components together.

The known device has the disadvantage that said relatively low taper causes a practically irreversible clamping of the stump and the bushing, also after the attachment screw has been released. This entails reciprocal positioning undercuts which prevent the stumps from being extracted, especially when two or more adjacent and non-parallel implants are installed, possibly connected by bridge elements. Therefore, the known device causes considerable difficulties and impediments to subsequent removals of the prosthesis.

Other implant devices of the prior art are disclosed in US 5.238.405, US 6.375.465 and US 2005/053897.

Purpose of the present invention is to achieve a support device for one or more elements of a dental prosthesis which, while guaranteeing a secure and effective support and anchorage of the dental prosthesis elements also allows the stumps to be removed easily and simply, even in the case of adjacent and non-parallel implants.

The Applicant has devised, tested and embodied the present invention to overcome the shortcomings of the state of the art and to obtain these and other purposes and advantages.

### SUMMARY OF THE INVENTION

The present invention is set forth and characterized in the independent claim while the dependent claims describe other characteristics of the invention or variants to the main inventive idea.

A support device for one or more elements of a dental prosthesis according to the present invention comprises an intraosseous element, for example a screw, provided with a clamping seating and able to be installed in the bone part of the dental arch, and a supporting body associated with the intraosseous element, or implant, provided with an axial cavity on which the dental prosthesis elements are supported.

The support device according to the invention also comprises a coupling element disposed partly inside the clamping seating and partly in the axial cavity, to determine the reciprocal coupling of the intraosseous element and the supporting body, and attachment means, able to keep the intraosseous element, the supporting body and the coupling element in a reciprocally assembled condition.

According to a characteristic feature of the present invention, the axial cavity comprises at least a conical portion, able to cooperate with a corresponding conical portion of the coupling element, and at least a polygonal portion able to cooperate with a corresponding polygonal portion of the coupling element.

With the present invention, the cooperation between the conical portions determines the axial clamping of the supporting body and the coupling element, whereas the cooperation between the polygonal portions determines the angular clamping of the supporting body and the coupling element.

In this way, since the angular clamping is caused by the polygonal portions, the reciprocal tapers of the conical portions require a relatively high value in degrees, with an inclination of 11° to less than 90°, allowing a secure axial clamping and also an easy removal of the coupling element from the cavity of the supporting body.

The present invention thus guarantees that the whole device can be completely dismantled, facilitating the operations to remove the supporting body and to remove the prostheses. This advantage is even more evident when removing prostheses in which two or more adjacent and non-parallel implants are provided, possibly connected by bridges.

According to a variant, the supporting body and the coupling element are made of the same materials. According to another variant, the supporting body and the coupling element are made of different materials, for example chosen from metal and plastic material, so as to define desired conditions to facilitate personalization by milling the plastic element.

According to another variant, the clamping seating of the intraosseous element comprises an initial polygonal portion, mating in shape with the polygonal portion of the coupling element. In this way, the coupling element is angularly constrained with respect to the intraosseous element, consequently maintaining the supporting body also angularly constrained to the intraosseous element.

According to another variant, the clamping seating of the intraosseous element comprises a threaded terminal portion with which the attachment means is able to cooperate.

### BRIEF DESCRIPTION OF THE DRAWINGS

These and other characteristics of the present invention will become apparent from the following description of a preferential form of embodiment, given as a non-restrictive example with reference to the attached drawings wherein:

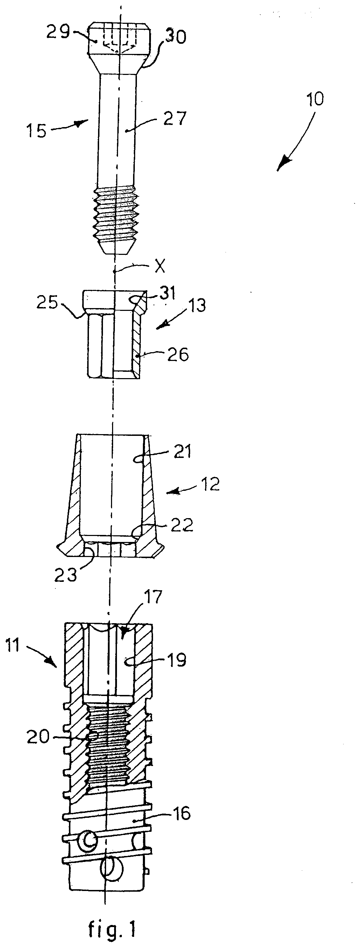

- fig. 1 is a sectioned and exploded lateral view of a support device according to the present invention;

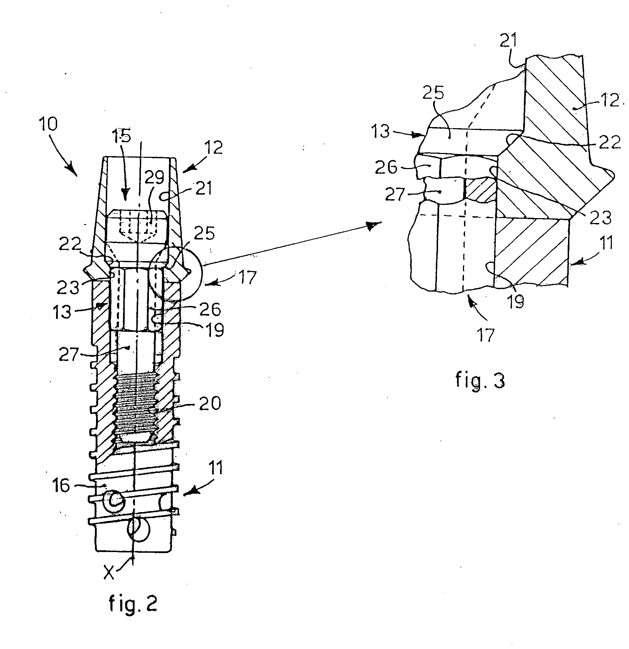

- fig. 2 is a sectioned lateral view of the support device in fig. 1, in the assembled condition;
- fig. 3 is a further sectioned enlargement of the support device in fig. 2;

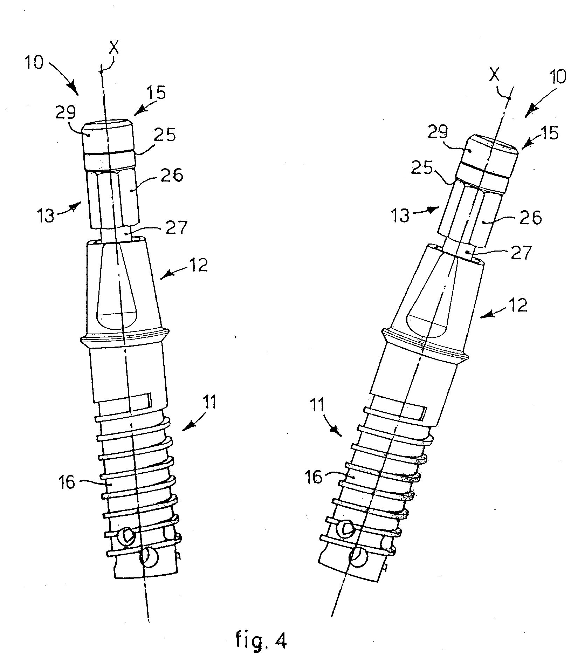

- fig. 4 is a perspective view of two support devices according to fig. 2, installed adjacent in a condition of reciprocal non-parallelism.

### DETAILED DESCRIPTION OF A PREFERENTIAL FORM OF EMBODIMENT

With reference to the attached drawings, a support device 10 according to the present invention comprises, disposed substantially coaxial along an assembly axis X, an intraosseous and bio-integratable implant 11, in this case with a screw, a supporting stump 12, a coupling bushing 13 and an attachment screw 15.

In this case, we shall refer specifically to a supporting stump 12 for biomedical prostheses, also on filed teeth, but it cannot be excluded that the present invention can equally be applied with another supporting body suitable for different operative applications, such as for example for positioning impressions for implantology implants and/or biointegratable and non-biointegratable orthopedic prostheses.

The implant 11 comprises a metal rod 16, provided externally with a threaded portion and internally with a clamping seating 17.

In this case, the threaded portion of the rod 16 allows to screw the implant 11 inside an osseous wall of the dental arch or other osseous regions of a person.

The clamping seating 17 is blind and comprises an initial portion 19 with a polygonal section, in this case hexagonal, and a threaded terminal portion 20.

The supporting stump 12 has external sizes and shape made according to the specific prosthetic applications for which it is intended, and comprises internally a through axial cavity 21.

To give a non-restrictive example, the supporting stump 12 can be used to support cemented or screwed-in prostheses, or for applications of bridges by means of welding or overmelting of the metal.

The axial cavity 21 comprises a first conical portion 22 having a taper from 11° to less than 90°, advantageously from 20° to 60°, and a second portion 23 with a hexagonal section, substantially equivalent to the initial portion 19 of the clamping seating 17. In this case, the second portion 23 extends longitudinally to the axial cavity 21, opening towards the implant 11, so that, in the assembled condition, it defines a continuity in shape with the initial portion 19.

The coupling bushing 13 is substantially tubular in shape with a size mating with the diameter of the axial cavity 21 and comprises an external surface having a first conical portion 25 and a second hexagonal portion 26.

In particular, the first portion 25 of the coupling bushing 13 has a taper corresponding to the taper of the first portion 22 of the axial cavity 21, so as to define the removable axial clamping of the coupling bushing 15 and the supporting stump 12.

The second portion 26 of the coupling bushing 13 has a hexagonal shaping mating both with the second portion 23 of the axial cavity, and also with the initial portion 16 of the clamping seating 17, so as to cooperate with both and define the reciprocal angular clamping of the coupling bushing 13, the supporting stump 12 and the implant 11.

The attachment screw 15 has a threaded rod 27 and a head 29, provided with a conical portion 30 for the anti-rotational clamping with a corresponding coupling seating 31 made inside the coupling bushing 13. The attachment screw 15 is also provided at the upper part with an actuation impression in order to house a screwing tool.

The threaded rod 27 is inserted axially along the assembly axis X and cooperates with the terminal portion 20 of the clamping seating 17, to keep the implant 11, the supporting stump 12 and the coupling bushing 13 stably and securely coupled together.

It is clear that modifications and/or additions of parts may be made to the device 10 as described heretofore, without departing from the field and scope of the present invention.

For example the rod 16 of the implant 11 can be provided on the surface with a plurality of blind recesses, that is, not through, and able to create a plurality of cutting walls such as to render the implant 11 of the self-threading type.

It also comes within the field of the present invention to provide that the supporting stump 12 and the coupling bushing 13 are made of different materials, for example of metal, plastic material, calcifiable plastic and/or others, to define desired conditions to facilitate the personalization of the plastic element by milling.

According to another variant, instead of the attachment screw 15, an elastic element is provided, a snap-in mechanism or other known attachment means able to ensure assembly of the parts.

According to known variant the implant 11 is not threaded externally.

It is also clear that, although the present invention has been described with reference to some specific examples, a person of skill in the art shall certainly be able to achieve many other equivalent forms of support device for one or more elements of a dental prosthesis, having the characteristics as set forth in the claims and hence all coming within the field of protection defined thereby.

## Claims

1. Support device for one or more elements of a dental prosthesis comprising an intraosseous element (11), with or without an external thread, provided with a clamping seating (17), a supporting body (12) able to be associated with said intraosseous element (11) and provided with an axial cavity (21), a coupling element (13), able to be disposed partly inside said clamping seating (17) and partly in said axial cavity (21), to determine thereby the reciprocal coupling of said intraosseous element (11) and said supporting body (12), and attachment means (15) able to keep said intraosseous element (11), said supporting body (12) and said coupling element (13) in a reciprocally assembled condition, whereby the axial cavity (21) of said supporting body (12) comprises at least a first conical portion (22), able to cooperate with a corresponding second conical portion (25) of said coupling element (13), **characterized in that** said axial cavity further comprises at least a first polygonal portion (23) able to cooperate with a corresponding second polygonal portion (26) of said coupling element (13) and **in that** said first conical portion (22) of the supporting body (12) and said second conical portion (25) of the coupling element (13) have a relatively high reciprocal degree of taper, comprised between 11° and less than 90°.

2. Support device as in claim 1, **characterized in that** the intraosseous element (11) is bio-integratable.

3. Support device as in claim 1, **characterized in that** said first conical portion (22) and said second conical portion (25) have a degree of taper comprised between 20° and about 60°.

4. Support device as in any claim hereinbefore, **characterized in that** the supporting body (12) and the coupling element (13) are made of the same material.

5. Support device as in any claim from 1 to 3, **characterized in that** the supporting body (12) and the coupling element (13) are made of different materials.

6. Support device as in any claim hereinbefore, **characterized in that** the clamping seating (17) of the intraosseous element (11) comprises an initial portion (19) polygonal in shape, mating with said first polygonal portion (23) of the supporting element (12) and with which said second polygonal portion (26) of the coupling element (13) is able to cooperate at least in the assembled condition of the support device.

7. Support device as in any claim hereinbefore, **characterized in that** the clamping seating (17) of the intraosseous element (11) comprises a threaded terminal portion (20) with which said attachment means (15) is able to cooperate.

## Patentansprüche

1. Stützvorrichtung für ein oder mehrere Elemente einer Zahnprothese, umfassend ein intraossäres Element (11) mit oder ohne externem Gewinde und versehen mit einer Befestigungsauflagefläche (17), einen Stützkörper (12), der mit dem intraossären Element (12) verbunden werden kann und mit einem axialen Hohlraum (21) versehen ist, ein Kupplungselement (13), welches teilweise innerhalb der Befestigungsauflagefläche (17) und teilweise in dem axialen Hohlraum (21) angeordnet werden kann, um dadurch die gegenseitige Verkupplung des intraossären Elements (11) und des Stützkörpers (12) festzulegen, und Befestigungsmittel (15), die das intraossäre Element (11), den Stützkörper (12) und das Kupplungselement (13) in gegenseitig zusammengesetztem Zustand halten können, wobei der axiale Hohlraum (21) des Stützkörpers (12) zumindest einen ersten konischen Abschnitt (22) umfasst, der mit einem entsprechenden zweiten konischen Abschnitt (25) des Kupplungselements (13) zusammenwirken kann, **dadurch gekennzeichnet, dass** der axiale Hohlraum außerdem zumindest einen ersten polygonalen Abschnitt (23) umfasst, der mit einem entsprechenden zweiten polygonalen Abschnitt (26) des Kupplungselements (13) zusammenwirken kann, und dass der erste konische Abschnitt (22) des Stützkörpers (12) und der zweite konische Abschnitt (25) des Kupplungselements (13) einen vergleichsweise hohen gegenseitigen Verjüngungsgrad im Bereich zwischen 11° und weniger als 90° aufweisen.

2. Stützvorrichtung gemäß Anspruch 1, **dadurch gekennzeichnet, dass** das intraossäre Element (11) biologisch abbaubar ist.

3. Stützvorrichtung gemäß Anspruch 1, **dadurch gekennzeichnet, dass** der erste konische Abschnitt (22) und der zweite konische Abschnitt (25) einen Verjüngungsgrad zwischen 20° und 60° aufweisen.

4. Stützvorrichtung gemäß irgendeinem der vorhergehenden Ansprüche, **dadurch gekennzeichnet, dass** der Stützkörper (12) und das Kupplungselement (13) aus dem gleichen Material bestehen.

5. Stützvorrichtung gemäß irgendeinem der Ansprüche 1 bis 3, **dadurch gekennzeichnet, dass** der Stützkörper (12) und das Kupplungselement (13) aus unterschiedlichen Materialien bestehen.

6. Stützvorrichtung gemäß irgendeinem der vorhergehenden Ansprüche, **dadurch gekennzeichnet, dass** die Befestigungsauflagefläche (17) des intraossären Elements (11) einen Anfangsabschnitt (19) mit polygonaler Form umfasst, der mit dem ersten polygonalen Abschnitt (23) des Stützelements (12) zusammenpasst, und mit dem der zweite polygonale Abschnitt (26) des Kupplungselements (13) zumindest in zusammengesetztem Zustand der Stützvorrichtung zusammenwirken kann.

7. Stützvorrichtung gemäß irgendeinem der vorhergehenden Ansprüche, **dadurch gekennzeichnet, dass** die Befestigungsauflagefläche (17) des intraossären Elements (11) einen mit einem Gewinde versehenen Endabschnitt (20) umfasst, mit dem das Befestigungsmittel (15) zusammenwirken kann.

## Revendications

1. Dispositif de support pour un ou plusieurs éléments d'une prothèse dentaire comprenant un élément endosseux (11) avec ou sans filet extérieur, pourvu d'un siège de serrage (17, un corps de support (12) pouvant être associé audit élément endosseux (11) et pourvu d'une cavité axiale (21), un élément d'accouplement (13) pouvant être disposé en partie à l'intérieur dudit siège de serrage (17) et en partie dans ladite cavité axiale (21) pour ainsi déterminer l'accouplement réciproque dudit élément endosseux (11) et dudit corps de support (12), et des moyens de fixation (15) pouvant maintenir ledit élément endosseux (11), ledit corps de support (12) et ledit élément d'accouplement (13) dans une condition assemblée les uns aux autres, la cavité axiale (21) dudit corps de support (12) comprenant au moins une première partie conique (22), pouvant coopérer avec une seconde partie conique (25) correspondante dudit élément d'accouplement (13), **caractérisé en ce que** ladite cavité axiale comprend également au moins une première partie polygonale (23) pouvant coopérer avec une seconde partie polygonale (26) correspondante dudit élément d'accouplement (13) et **en ce que** ladite première partie conique (22) du corps de support (12) et ladite seconde partie conique (25) de l'élément d'accouplement (13) ont un haut degré de conicité réciproque, de 11° à moins de 90°.

2. Dispositif de support selon la revendication 1, **caractérisé en ce que** l'élément endosseux (11) est bio-intégrable.

3. Dispositif de support selon la revendication 1, **caractérisé en ce que** ladite première partie conique (22) et ladite seconde partie conique (25) ont un degré de conicité de 20° à 60°.

4. Dispositif de support selon n'importe laquelle des revendications précédentes, **caractérisé en ce que** le corps de support (12) et l'élément d'accouplement (13) sont faits du même matériau.

5. Dispositif de support selon n'importe laquelle des revendications 1 à 3, **caractérisé en ce que** le corps de support (12) et l'élément d'accouplement (13) sont faits de matériaux différents.

6. Dispositif de support selon importe laquelle des revendications précédentes, **caractérisé en ce que** le siège de serrage (17) de l'élément endosseux (11) comprend une partie initiale (19) de forme polygonale, conjuguée avec ladite première partie polygonale (23) de l'élément de support (12) et avec laquelle ladite seconde partie polygonale (26) de l'élément d'accouplement (13) peut coopérer au moins dans la condition assemblée du dispositif de support.

7. Dispositif de support selon n'importe laquelle des revendications précédentes, **caractérisé en ce que** le siège de serrage (17) de l'élément endosseux (11) comprend une partie terminale filetée (20) avec laquelle peuvent coopérer lesdits moyens de fixation (15).
